# EUROPEAN PATENT APPLICATION

(11) **EP 4 706 471 A1**
(43) Date of publication of application: **11.03.2026**
(21) Application number: 25193752.0
(22) Date of filing: 04.08.2025
(51) Int. Cl.: A47J 37/06

(54) **CLAMSHELL AIR FRYER**

(30) Priority: 12.08.2024 CN 202421948933 U; 25.11.2024 CN 202422878646 U
(71) Applicant: Ningbo Careline Electric Appliance Co., Ltd., Ningbo, Zhejiang 315000 (CN)
(72) Inventor: ZHANG, Yichi, Ningbo City, 315000 (CN); PAN, Huayuan, Ningbo City, 315000 (CN); CUI, Jianqiang, Ningbo City, 315000 (CN); HUO, Zhian, Ningbo City, 315000 (CN)
(74) Representative: Meyer-Dulheuer MD Legal Patentanwälte PartG mbB

(57) **Abstract**

The present disclosure relates to a clamshell air fryer, by arranging the protruding part on the clamshell lid and respectively arranging the door lock assembly and the unlocking member in the clamshell lid and movably in the mounting groove at the bottom of the protruding part, the door lock assembly and the unlocking member can be better hidden, so as to improve the overall aesthetics of the air fryer. At the same time, when an upward moving force is applied to the unlocking member, not only can the locking member be separated from the locking groove, so that the clamshell lid is in a state of being flippable to open the lateral opening, but also the upward movement of the unlocking member can enable the mounting groove to become a force application point for the user's fingers to extend into to drive the clamshell lid to flip, effectively improving the convenience of use and user experience of the air fryer.

## Description

### CROSS REFERENCE TO RELATED APPLICATIONS

The present disclosure claims priorities to Chinese patent application No. 2024219489339 filed to the China Patent Office on August 12, 2024, entitled "Clamshell Air Fryer", and the Chinese patent application No. 2024228786461 filed to the China Patent Office on November 25, 2024, entitled "Clamshell Air Fryer with Simple Structure", the entire contents of which incorporated herein by reference.

### TECHNICAL FIELD

The present disclosure relates to the technical field of kitchen appliances and cooking appliances, in particular to an air fryer, and more particularly to a Clamshell air fryer.

### BACKGROUND

With the development of society and the improvement of people's living standards, the usage rate of air fryers is increasing. Among existing air fryers, most are Clamshell air fryers, which include a main body with a cooking cavity and a door panel provided on the main body for opening and closing the cooking cavity. One end of the door panel is hinged to the main body, and the other end is unlockably fastened to the main body through a door lock assembly. The door lock assembly of these air fryers includes a locking component for fastening and an unlocking component for unlocking. The unlocking component is generally disposed on the main body or the door panel and protrudes from the surface of the main body or the door panel. Although the arrangement of the unlocking component protruding from the surface facilitates user operation to open the cooking cavity, it results in poor overall aesthetics and unsatisfactory user experience.

### SUMMARY

The application provides a clamshell air fryer, comprising a main body and a cooking cavity with a lateral opening provided on the inner side of the main body, a clamshell lid capable of flipping to open and close the lateral opening is provided at the lateral opening of the cooking cavity, the lower part of the clamshell lid is hinged to the main body, and the upper part is provided with a door lock assembly, the door lock assembly includes a locking member, a mounting cavity is provided at the top of the clamshell lid, the lower part of the locking member is movably limited in the mounting cavity, and the upper part is adapted to extend and protrude from the top plane of the clamshell lid, a locking groove corresponding to the position of the locking member is provided at the top of the lateral opening of the cooking cavity, a protruding part protruding from the outer surface of the clamshell lid is provided at the upper part of the clamshell lid, a mounting groove with a downward opening and communicating with the mounting cavity is provided at the bottom of the protruding part, an unlocking member is movably limited in the mounting groove, and the unlocking member is adapted to be drivingly connected to the locking member, an elastic member telescopically connected to the door lock assembly is provided in the clamshell lid, and the elastic member has an active state of being stretched or compressed and a reset state.

When the unlocking member is moved upward by an external force, the elastic member is adapted to be in the active state, and the locking member is adapted to move downward under the driving of the unlocking member, thereby being separated from the locking groove, when the external force on the unlocking member disappears, the elastic member is adapted to change from the active state to the reset state, the unlocking member is adapted to move downward to reset under the action of the elastic member, and the locking member is adapted to move upward under the action of the elastic member to engage with the locking groove.

In one or more embodiments, the door lock assembly further includes a transmission member whose middle part is rotatably limited in the mounting cavity, one end of the transmission member is provided with a clamping groove, and the other end is provided with a sliding groove, the transmission member is adapted to be movably clamped to the locking member through the clamping groove, a connecting member extending into the mounting cavity is provided on the unlocking member, and the connecting member is adapted to be movably limited in the sliding groove.

In one or more embodiments, the mounting groove is provided with a vertically extending guide enclosure, and the guide enclosure is adapted to match the unlocking member, limiting portions extending outward are provided on both sides of the unlocking member, limiting grooves matching the limiting portions are provided on the guide enclosure, and the limiting portions are adapted to be slidably provided in the limiting grooves.

In one or more embodiments, a connecting member extending outward and drivingly connected to the locking member is provided on the outer side of the unlocking member, a vertically extending guide groove matching the connecting member is provided on the guide enclosure, and the connecting member is adapted to be slidably provided in the guide groove. In one or more embodiments, the locking member includes a first locking member and a second locking member arranged symmetrically, a connecting member extending outward into the mounting cavity is provided on the outer side of the unlocking member, and the connecting member includes a first connecting member and a second connecting member, the first connecting member and the second connecting member are adapted to be drivingly connected to the first locking member and the second locking member respectively.

In one or more embodiments, the locking member includes a first locking piece and a second locking piece arranged oppositely, a mounting cavity is provided in the clamshell lid, a first locking groove and a second locking groove corresponding to the first locking piece and the second locking piece are provided at the top of the lateral opening of the cooking cavity, a connecting member extending into the mounting cavity is provided on the unlocking member, a first transmission member and a second transmission member are provided in the mounting cavity, and the connecting member is adapted to be drivingly connected to the first locking piece and the second locking piece through the first transmission member and the second transmission member respectively.

When the unlocking member is moved upward by an external force, the elastic member is adapted to be in the active state, and the connecting member is adapted to drive the first locking piece and the second locking piece to move into the mounting cavity through the first transmission member and the second transmission member respectively, thereby being separated from the first locking groove and the second locking groove, when the external force on the unlocking member disappears, the elastic member is adapted to change from the active state to the reset state, the unlocking member is adapted to move downward to reset under the action of the elastic member, and the locking member is adapted to move upward under the action of the elastic member to engage with the locking groove.

In one or more embodiments, one end of the first transmission member and one end of the second transmission member are movably connected to the first locking piece and the second locking piece respectively, and the other ends are provided with a first connecting groove and a second connecting groove respectively, both the first connecting groove and the second connecting groove are sleeved on the connecting member.

In one or more embodiments, a first rotating shaft and a second rotating shaft are provided on both sides of the first transmission member and the second transmission member respectively, a first support structure and a second support structure corresponding to the first rotating shaft and the second rotating shaft are provided in the mounting cavity respectively, the first rotating shaft and the second rotating shaft are adapted to be movably limited on the first support structure and the second support structure respectively.

In one or more embodiments, the mounting groove is provided with a vertically extending guide enclosure matching the unlocking member, guide portions extending outward are provided on both sides of the unlocking member, guide grooves corresponding to the guide portions are provided on the guide enclosure, and the guide portions are adapted to be slidably limited in the guide grooves.

In one or more embodiments, the guide groove is adapted to be formed by the guide enclosure recessing outward, and the elastic member is provided in the guide groove, with one end of the elastic member abutting against the guide portion; and/or
A constricted portion is provided at the opening of the guide groove, and the internal size of the constricted portion is smaller than the external size of the guide portion, the guide portion is adapted to be slidably limited in the guide groove through the constricted portion, the external size of the guide portion is larger than the opening size of the mounting groove, and the unlocking member is adapted to be slidably limited in the mounting groove through the guide portion.

In one or more embodiments, the mounting groove is provided with a vertically extending guide enclosure matching the unlocking member, a vertically arranged sliding groove matching the connecting member is provided on the guide enclosure, and the connecting member is slidably provided in the sliding groove, a plurality of reinforcing ribs are provided on the outer side of the connecting member, and the reinforcing ribs are adapted to connect the connecting member and the unlocking member.

In one or more embodiments, a locking hole communicating with the mounting cavity is provided at the top of the clamshell lid, a through hole corresponding to the locking hole is provided at the bottom of the mounting cavity, the lower part of the locking member is movably limited in the through hole, and the upper part is adapted to be movably limited in the locking hole, with at least part of it extending to protrude from the top plane of the clamshell lid.

In one or more embodiments, a first limiting protrusion extending outward and a second limiting protrusion located below the first limiting protrusion are provided in the middle of the locking member, the external size of the first limiting protrusion is larger than that of the locking hole, and the external size of the second limiting protrusion is larger than that of the through hole, the locking member is adapted to be movably limited in the mounting cavity through the first limiting protrusion and the second limiting protrusion.

In one or more embodiments, the mounting groove is adapted to be arranged adjacent to the outer surface of the clamshell lid.

In one or more embodiments, the bottom of the unlocking member is adapted to be flush with the bottom plane of the protruding part.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is a schematic diagram of the overall structure of the first embodiment of the present disclosure.
FIG. 2 is a schematic diagram of the clamshell lid flipping according to the first embodiment of the present disclosure.
FIG. 3 is a schematic diagram from a first perspective of the first embodiment of the present disclosure.
FIG. 4 is a schematic diagram from a second perspective of the first embodiment of the present disclosure.
FIG. 5 is an exploded view of part of the structure of the clamshell lid according to the first embodiment of the present disclosure.
FIG. 6 is a partially enlarged cross-sectional view of the clamshell lid according to the first embodiment of the present disclosure.
FIG. 7 is a schematic diagram of the overall structure of the second embodiment of the present disclosure.
FIG. 8 is a schematic diagram of the clamshell lid flipping according to the second embodiment of the present disclosure.
FIG. 9 is a schematic diagram of the clamshell lid according to the second embodiment of the present disclosure.
FIG. 10 is an exploded view of the door lock assembly according to the second embodiment of the present disclosure.
FIG. 11 is a schematic diagram of the transmission of the unlocking member according to the second embodiment of the present disclosure.
FIG. 12 is a schematic diagram of the installation of the unlocking member according to the second embodiment of the present disclosure.
FIG. 13 is a cross-sectional view of the door lock assembly according to the second embodiment of the present disclosure.

Reference numerals:
10- main body; 11- cooking cavity; 12- locking groove; 20- clamshell lid; 21- mounting cavity; 22- locking hole; 23- through hole; 30- door lock assembly; 31- locking member; 311- first limiting protrusion; 312- second limiting protrusion; 313- first locking member; 314- second locking member; 32- transmission member; 321- clamping groove; 322- sliding groove; 40-protruding part; 41- mounting groove; 42- guide enclosure; 421- guide groove; 422- limiting groove; 50- unlocking member; 51- connecting member; 511- first connecting member; 512-second connecting member; 52- limiting portion; 60- elastic member.
810- main body; 811- cooking cavity; 820- clamshell lid; 821- mounting cavity;
8211- first support structure; 8212- second support structure; 822- protruding part;
823- mounting groove; 8231- opening; 824- guide enclosure; 8241- guide groove;
8242- constricted portion; 8243- sliding groove; 830- door lock assembly;
831- locking member; 8311- first locking piece; 8312- second locking piece;
832- unlocking member; 8321- connecting member; 8322- reinforcing rib;
8323- guide portion; 833- first transmission member; 8331- first connecting groove;
8332- first rotating shaft; 834- second transmission member; 8341- second connecting groove;
8342- second rotating shaft; 840 - elastic member.

### DETAILED DESCRIPTION

The present application provides a Clamshell air fryer to solve the technical problems of poor overall aesthetics and unsatisfactory user experience of existing air fryers.

To solve the above technical problems, the present utility model provides a Clamshell air fryer, comprising a main body and a cooking cavity with a lateral opening provided on the inner side of the main body, a clamshell lid capable of flipping to open and close the lateral opening is provided at the lateral opening of the cooking cavity, the lower part of the clamshell lid is hinged to the main body, and the upper part is provided with a door lock assembly, the door lock assembly includes a locking member, a mounting cavity is provided at the top of the clamshell lid, the lower part of the locking member is movably limited in the mounting cavity, and the upper part is adapted to extend and protrude from the top plane of the clamshell lid, a locking groove corresponding to the position of the locking member is provided at the top of the lateral opening of the cooking cavity, a protruding part protruding from the outer surface of the clamshell lid is provided at the upper part of the clamshell lid, a mounting groove with a downward opening and communicating with the mounting cavity is provided at the bottom of the protruding part, an unlocking member is movably limited in the mounting groove, and the unlocking member is adapted to be drivingly connected to the locking member, an elastic member telescopically connected to the door lock assembly is provided in the clamshell lid, and the elastic member has an active state of being stretched or compressed and a reset state; when the unlocking member is moved upward by an external force, the elastic member is adapted to be in the active state, and the locking member is adapted to move downward under the driving of the unlocking member, thereby being separated from the locking groove, when the external force on the unlocking member disappears, the elastic member is adapted to change from the active state to the reset state, the unlocking member is adapted to move downward to reset under the action of the elastic member, and the locking member is adapted to move upward under the action of the elastic member to engage with the locking groove. By arranging the protruding part on the clamshell lid and respectively arranging the door lock assembly and the unlocking member in the clamshell lid and movably in the mounting groove at the bottom of the protruding part, the door lock assembly and the unlocking member can be better hidden, so as to improve the overall aesthetics of the air fryer. At the same time, when an upward moving force is applied to the unlocking member, not only can the locking member be separated from the locking groove, so that the clamshell lid is in a state of being flippable to open the lateral opening, but also the upward movement of the unlocking member can enable the mounting groove to become a force application point for the user's fingers to extend into to drive the clamshell lid to flip, effectively improving the convenience of use and user experience of the air fryer.

In an optional embodiment, a locking hole communicating with the mounting cavity is provided at the top of the clamshell lid, and a through hole corresponding to the locking hole is provided at the bottom of the mounting cavity, the lower part of the locking member is movably limited in the through hole, and the upper part is adapted to be movably limited in the locking hole, with at least part of it extending to protrude from the top plane of the clamshell lid. The locking hole and the through hole can not only limit the periphery of the locking member, enabling the locking member to move better in the vertical direction to engage with the locking groove, but also guide the locking member, reducing the occurrence of misalignment jamming or damage when the locking member moves up and down, and effectively improving the performance stability of the door lock assembly and the air fryer.

In an optional embodiment, a first limiting protrusion extending outward and a second limiting protrusion located below the first limiting protrusion are provided in the middle of the locking member, the external size of the first limiting protrusion is larger than that of the locking hole, and the external size of the second limiting protrusion is larger than that of the through hole, the locking member is adapted to be movably limited in the mounting cavity through the first limiting protrusion and the second limiting protrusion, the first limiting protrusion and the second limiting protrusion are adapted to play a limiting role. By limiting the up and down direction of the locking member through the first limiting protrusion and the second limiting protrusion, the situation that the locking member falls out of the locking hole and/or the through hole during up and down movement, resulting in failure of the door lock assembly, can be effectively avoided, and the performance stability of the door lock assembly and the air fryer can be effectively improved.

In an optional embodiment, the door lock assembly further includes a transmission member whose middle part is rotatably limited in the mounting cavity, one end of the transmission member is provided with a clamping groove, and the other end is provided with a sliding groove, the transmission member is adapted to be movably clamped to the locking member through the clamping groove, a connecting member extending into the mounting cavity is provided on the unlocking member, and the connecting member is adapted to be movably limited in the sliding groove, a lever transmission is formed between the transmission member and the locking member as well as the unlocking member. This arrangement can not only effectively simplify the structure of the air fryer, reduce production costs and user use costs, but also effectively reduce the operation difficulty of the door lock assembly and improve user experience. At the same time, by movably drivingly connecting the transmission member to the locking member and the unlocking member, it can be ensured that the locking member and the unlocking member will not be jammed or damaged during up and down movement, effectively improving the performance stability of the door lock assembly and the unlocking member.

In an optional embodiment, the mounting groove is provided with a vertically extending guide enclosure, and the guide enclosure is adapted to match the unlocking member. The guide enclosure is adapted to play a limiting and/or guiding role, through the guide enclosure, not only can the periphery of the unlocking member be limited, enabling the unlocking member to move better in the vertical direction to drive the locking member to move to be separated from or engaged with the locking groove, but also the up and down movement of the unlocking member can be guided, avoiding misalignment jamming and/or damage during movement, and effectively improving the performance stability of the unlocking member.

In an optional embodiment, a connecting member extending outward and drivingly connected to the locking member is provided on the outer side of the unlocking member, a vertically extending guide groove matching the connecting member is provided on the guide enclosure, and the connecting member is adapted to be slidably provided in the guide groove. The guide groove is adapted to play a guiding and/or limiting role, through the guide groove, not only can the sliding of the connecting member be guided, enabling the connecting member to move better in the vertical direction to better drive the locking member to move to be separated from or engaged with the locking groove, but also the left and right directions of the connecting member can be limited, avoiding the situation that the connecting member falls out of the sliding groove of the transmission member during up and down sliding, resulting in transmission failure, and effectively improving the transmission stability between the unlocking member and the transmission member as well as the performance stability of the air fryer.

In an optional embodiment, limiting portions extending outward are provided on both sides of the unlocking member, limiting grooves matching the limiting portions are provided on the guide enclosure, and the limiting portions are adapted to be slidably provided in the limiting grooves. Through the limiting portions and the limiting grooves, not only can the sliding of the unlocking member be guided and/or limited to reduce the probability of misalignment jamming or damage when the unlocking member slides up and down, but also the unlocking member can be limited to avoid the situation that the unlocking member falls out of the limiting grooves during up and down sliding, effectively ensuring the performance stability of the unlocking member and user experience.

In an optional embodiment, the locking member includes a first locking member and a second locking member arranged symmetrically, a connecting member extending outward into the mounting cavity is provided on the outer side of the unlocking member, and the connecting member includes a first connecting member and a second connecting member, the first connecting member and the second connecting member are adapted to be drivingly connected to the first locking member and the second locking member respectively. By arranging the first locking member and the second locking member symmetrically, the clamshell lid can be better clamped to the main body to close the lateral opening of the cooking cavity, effectively improving the clamping strength and stability between the clamshell lid and the main body. At the same time, by driving the two first locking members and second locking members to move through the unlocking member, not only can the structure of the air fryer be simplified, reducing production costs and use costs, but also the operation difficulty of opening and closing the clamshell lid can be effectively reduced, improving user convenience and experience.

In an optional embodiment, the mounting groove is adapted to be arranged adjacent to the outer surface of the clamshell lid. By arranging the mounting groove adjacent to the outer surface of the clamshell lid, not only can the unlocking member be further hidden to improve the overall aesthetics of the air fryer, but also the transmission distance between the unlocking member and the locking member can be shortened, enabling the unlocking member to drive the locking member to move to be separated from or engaged with the locking groove faster and better, effectively improving transmission efficiency.

In an optional embodiment, the bottom of the unlocking member is adapted to be flush with the bottom plane of the protruding part. By setting the bottom of the unlocking member to be flush with the bottom of the protruding part, the unlocking member can be better hidden to improve the overall aesthetics of the air fryer and improve user experience.

The present embodiment also provides a Clamshell air fryer with simple structure, comprising a main body and a cooking cavity with an opening provided in the main body, a clamshell lid capable of flipping to open and close the opening is provided at the opening of the cooking cavity, one end of the clamshell lid is hinged to the main body, and the other end is provided with a door lock assembly, the door lock assembly includes a first locking piece and a second locking piece arranged oppositely, a mounting cavity is provided in the clamshell lid, one end of the first locking piece and the second locking piece is movably limited in the mounting cavity, and the other end is adapted to extend out of the clamshell lid toward the edge of the opening, a first locking groove and a second locking groove corresponding to the first locking piece and the second locking piece are provided at the edge of the opening of the cooking cavity, a mounting groove communicating with the mounting cavity is provided on the clamshell lid, an unlocking member is movably limited in the mounting groove, a connecting member extending into the mounting cavity is provided on the unlocking member, a first transmission member and a second transmission member are provided in the mounting cavity, and the connecting member is adapted to be drivingly connected to the first locking piece and the second locking piece through the first transmission member and the second transmission member respectively, an elastic member telescopically connected to the door lock assembly is provided in the clamshell lid; when the unlocking member is moved into the mounting groove by an external force, the elastic member is adapted to be stretched or compressed, and the connecting member is adapted to drive the first locking piece and the second locking piece to move into the mounting cavity through the first transmission member and the second transmission member respectively, thereby being separated from the first locking groove and the second locking groove, when the external force on the unlocking member disappears, the unlocking member is adapted to reset under the action of the elastic member, and the connecting member is adapted to drive the first locking piece and the second locking piece to move out of the mounting cavity through the first transmission member and the second transmission member respectively, thereby being engaged with the first locking groove and the second locking groove. The air fryer can simplify the transmission structure of the door lock assembly by arranging the connecting member on the unlocking member to drive the first transmission member, the second transmission member, the first locking piece and the second locking piece to move through the connecting member, so that the first locking piece and the second locking piece can be separably engaged with the main body, effectively reducing the production cost and user use cost of the air fryer and improving user experience.

In an optional embodiment, one end of the first transmission member and one end of the second transmission member are movably connected to the first locking piece and the second locking piece respectively, and the other ends are provided with a first connecting groove and a second connecting groove respectively, both the first connecting groove and the second connecting groove are sleeved on the connecting member. By sleeving the first transmission member and the second transmission member on the connecting member through the first connecting groove and the second connecting groove, not only can the transmission structure of the door lock assembly be simplified, thereby reducing production costs and user use costs, but also the synchronism of the first locking piece and the second locking piece during movement can be ensured, effectively improving the use fluency of the clamshell lid and user experience.

In an optional embodiment, a first rotating shaft and a second rotating shaft are provided on both sides of the first transmission member and the second transmission member respectively, a first support structure and a second support structure corresponding to the first rotating shaft and the second rotating shaft are provided in the mounting cavity respectively, the first rotating shaft and the second rotating shaft are adapted to be movably limited on the first support structure and the second support structure respectively. The first support structure and the second support structure are adapted to support and/or limit the first transmission member and the second transmission member. By supporting and/or limiting the first transmission member and the second transmission member through the first support structure and the second support structure, not only can it be ensured that the first transmission member and the second transmission member have sufficient movement space to drive the first locking piece and the second locking piece to move to be separated from or engaged with the first locking groove and the second locking groove, but also the situation that the first transmission member and the second transmission member are jammed or damaged due to displacement during rotation can be avoided, effectively ensuring the transmission stability of the first transmission member and the second transmission member and the performance stability of the air fryer.

In an optional embodiment, a plurality of reinforcing ribs are provided on the outer side of the connecting member, and the reinforcing ribs are adapted to connect the connecting member and the unlocking member. By arranging a plurality of reinforcing ribs connected to the unlocking member on the outer side of the connecting member, the structural strength of the connecting member can be improved, ensuring the transmission stability of the connecting member and the performance stability of the air fryer.

In an optional embodiment, the mounting groove is provided with a vertically extending guide enclosure matching the unlocking member, guide portions extending outward are provided on both sides of the unlocking member, guide grooves corresponding to the guide portions are provided on the guide enclosure, and the guide portions are adapted to be slidably limited in the guide grooves. The guide enclosure and the guide portions are adapted to limit and/or guide the sliding of the unlocking member. By limiting and/or guiding the unlocking member through the guide enclosure and the guide portions, not only can the unlocking member slide more smoothly, effectively ensuring user experience, but also the situation that the unlocking member is damaged due to misalignment or jammed during sliding can be avoided, effectively ensuring the performance stability of the door lock assembly and the air fryer.

In an optional embodiment, the guide groove is adapted to be formed by the guide enclosure recessing outward, and the elastic member is provided in the guide groove, with one end of the elastic member abutting against the guide portion. By forming the guide groove by recessing the guide enclosure outward, the structure of the door lock assembly can be simplified, reducing production costs and user use costs. At the same time, by arranging the elastic member in the guide groove and abutting against the guide portion, not only can the installation structure of the elastic member be simplified, reducing production costs and user use costs, but also the guide groove can be used to position and/or limit the installation of the elastic member, reducing the installation difficulty of the elastic member, and avoiding the situation that the elastic member is damaged due to misalignment during compression or stretching, effectively ensuring the performance stability of the elastic member.

In an optional embodiment, a constricted portion is provided at the opening of the guide groove, and the internal size of the constricted portion is smaller than the external size of the guide portion, the guide portion is adapted to be slidably limited in the guide groove through the constricted portion. By slidably limiting the guide portion in the guide groove through the constricted portion, not only can the situation that the guide portion is jammed or damaged due to misalignment during sliding be avoided, but also the situation that the guide portion falls out of the guide groove during sliding resulting in failure can be avoided, effectively ensuring the performance stability of the unlocking member.

In an optional embodiment, the external size of the guide portion is larger than the opening size of the mounting groove, and the unlocking member is adapted to be slidably limited in the mounting groove through the guide portion. By setting the external size of the guide portion to be larger than the opening size of the mounting groove, the situation that the unlocking member falls out of the mounting groove during sliding can be avoided, effectively ensuring the performance stability of the unlocking member.

In an optional embodiment, the mounting groove is provided with a vertically extending guide enclosure matching the unlocking member, a vertically arranged sliding groove matching the connecting member is provided on the guide enclosure, and the connecting member is slidably provided in the sliding groove. The sliding groove is adapted to limit and/or guide the sliding of the connecting member. By limiting and/or guiding the sliding of the connecting member through the sliding groove, the situation that the connecting member is damaged due to misalignment or jammed during sliding can be avoided, effectively ensuring the performance stability of the door lock assembly and the air fryer.

In an optional embodiment, the bottom of the clamshell lid is hinged to the main body, a protruding part protruding from the outer surface of the clamshell lid is provided at the top of the clamshell lid, the mounting groove is provided at the bottom of the protruding part, and the mounting groove is adapted to be arranged adjacent to the outer surface of the clamshell lid, the bottom of the unlocking member is adapted to be flush with the bottom plane of the protruding part. By arranging the unlocking member at the bottom of the protruding part adjacent to the outer surface of the clamshell lid and setting the bottom of the unlocking member to be flush with the bottom plane of the protruding part, the unlocking member can be hidden to improve the overall aesthetics of the air fryer.

Compared with the prior art, the beneficial effects of the present application are as follows:
In the present application, by arranging the protruding part on the clamshell lid and respectively arranging the door lock assembly and the unlocking member in the clamshell lid and movably in the mounting groove at the bottom of the protruding part, the door lock assembly and the unlocking member can be better hidden, so as to improve the overall aesthetics of the air fryer. At the same time, when an upward moving force is applied to the unlocking member, not only can the locking member be separated from the locking groove, so that the clamshell lid is in a state of being flippable to open the lateral opening, but also the upward movement of the unlocking member can enable the mounting groove to become a force application point for the user's fingers to extend into to drive the clamshell lid to flip, effectively improving the convenience of use and user experience of the air fryer. **In** addition, in the present application, by arranging the connecting member on the unlocking member to drive the first transmission member, the second transmission member, the first locking piece and the second locking piece to move through the connecting member, so that the first locking piece and the second locking piece can be separably engaged with the main body, the transmission structure of the door lock assembly can be simplified, effectively reducing the production cost and user use cost of the air fryer and improving user experience.

By arranging the connecting member on the unlocking member to drive the first transmission member, the second transmission member, the first locking piece and the second locking piece to move through the connecting member, so that the first locking piece and the second locking piece can be separably engaged with the main body, the transmission structure of the door lock assembly can be simplified, effectively reducing the production cost and user use cost of the air fryer and improving user experience.

To make the objectives, technical solutions and advantages of the embodiments of the present disclosure clearer, the technical solutions in the embodiments of the present disclosure will be clearly and completely described below with reference to the drawings in the embodiments of the present disclosure. Obviously, the described embodiments are part of the embodiments of the present disclosure, not all of them. The components of the embodiments of the present disclosure generally described and shown in the drawings herein can be arranged and designed in various different configurations.

Therefore, the detailed description of the embodiments of the present disclosure provided in the drawings below is not intended to limit the scope of the claimed present disclosure, but merely represents selected embodiments of the present disclosure. Based on the embodiments in the present disclosure, all other embodiments obtained by those skilled in the art without creative work belong to the protection scope of the present disclosure.

### Embodiment 1:

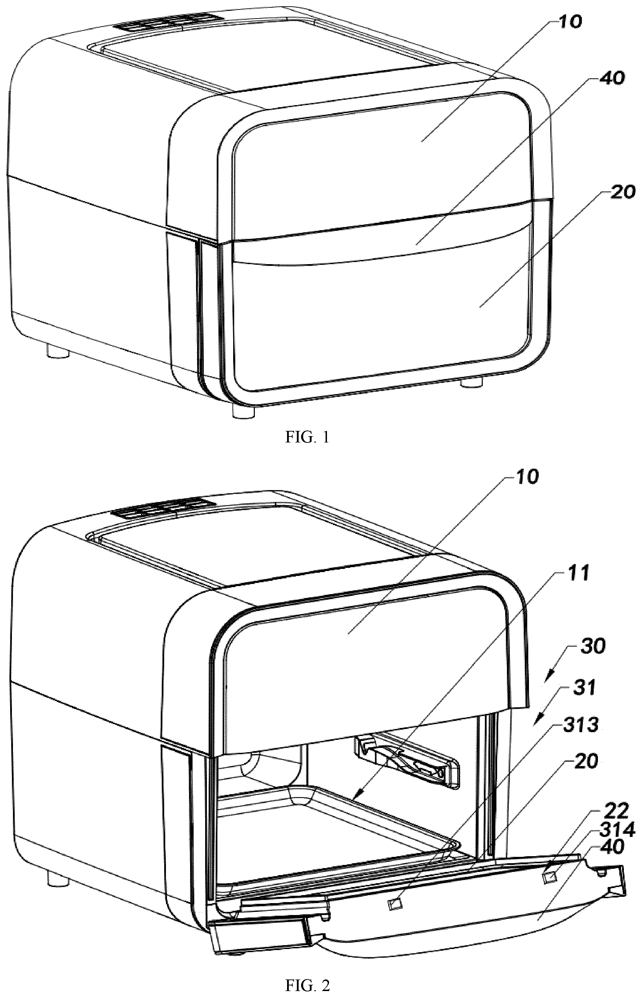

As shown in FIG. 1 to FIG. 6, which are schematic diagrams of the first Clamshell air fryer provided by the present application, the air fryer includes a main body 10, a cooking cavity 11 provided with a lateral opening on the inner side of the main body 10, and a hot air circulation system communicating with the cooking cavity 11. The hot air circulation system is adapted to generate circulating hot air and introduce it into the cooking cavity 11, so as to cook the food in the cooking cavity 11.

As shown in FIG. 1 and FIG. 2, a clamshell lid 20 capable of flipping to open and close the lateral opening is provided at the lateral opening of the cooking cavity 11, the lower part of the clamshell lid 20 is adapted to be hinged to the main body 10, and the upper part is provided with a door lock assembly 30 capable of being separably clamped to the main body 10. Through the door lock assembly 30, the air fryer can be kept in a closed state by the door lock assembly 30 after flipping to close the lateral opening, effectively improving the convenience of use of the air fryer.

As shown in FIG. 2 to FIG. 6, the door lock assembly 30 includes a locking member 31, a mounting cavity 21 is provided at the top of the clamshell lid 20, the lower part of the locking member 31 is movably limited in the mounting cavity 21, and the upper part is adapted to extend and protrude from the top plane of the clamshell lid 20, a locking groove 12 with a downward opening corresponding to the position of the locking member 31 is provided at the top of the lateral opening of the cooking cavity 11, a protruding part 40 protruding from the outer surface of the clamshell lid is provided at the upper part of the clamshell lid 20, a mounting groove 41 with a downward opening and communicating with the mounting cavity 21 is provided at the bottom of the protruding part 40, an unlocking member 50 is movably limited in the mounting groove 41, and the unlocking member 50 is adapted to be drivingly connected to the locking member 31, an elastic member 60 telescopically connected to the door lock assembly 30 is provided in the clamshell lid 20, the elastic member 60 is adapted to be made of elastic materials such as stainless steel and spring steel, and the elastic member 60 has an active state of being stretched or compressed and a reset state. When the unlocking member 50 is pressed to move upward, the elastic member 60 is adapted to be in the active state, and the locking member 31 is adapted to move downward under the driving of the unlocking member 50 to be separated from the locking groove 12. At this time, the lateral opening can be opened by flipping the clamshell lid 20 to put food into the cooking cavity 11 and/or take out food from the cooking cavity 11. When the clamshell lid 20 is flipped to close the lateral opening and the pressing of the unlocking member 50 is stopped, the unlocking member 50 is adapted to move downward to reset under the action of the elastic member 60, and the locking member 31 is adapted to move upward under the action of the elastic member 60 to engage with the locking groove 12. At this time, the clamshell lid 20 is adapted to be kept in a state of closing the lateral opening, and the air fryer can continuously cook the food in the cooking cavity 11. The air fryer can better hide the door lock assembly 30 and the unlocking member 50 by arranging the protruding part 40 on the clamshell lid 20 and respectively arranging the door lock assembly 30 and the unlocking member 50 in the clamshell lid 20 and movably in the mounting groove 41 at the bottom of the protruding part 40, so as to improve the overall aesthetics of the air fryer. At the same time, when an upward moving force is applied to the unlocking member 50, not only can the locking member 31 be separated from the locking groove 12, so that the clamshell lid 20 is in a state of being flippable to open the lateral opening, but also the upward movement of the unlocking member can enable the mounting groove 41 to become a force application point for the user's fingers to extend into to drive the clamshell lid 20 to flip, effectively improving the convenience of use and user experience of the air fryer.

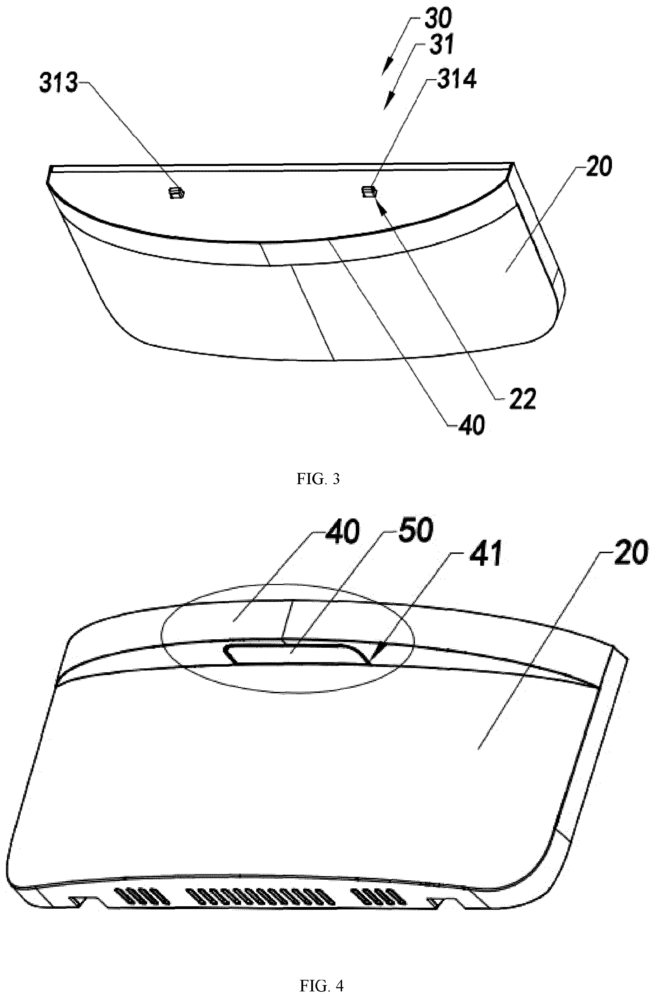

As shown in FIG. 3, FIG. 5 and FIG. 6, in an optional embodiment, a locking hole 22 communicating with the mounting cavity 21 is provided at the top of the clamshell lid 20, and a through hole 23 corresponding to the locking hole 22 is provided at the bottom of the mounting cavity 21, the lower part of the locking member 31 is movably limited in the through hole 23, and the upper part is adapted to be movably limited in the locking hole 22, with at least part of it extending to protrude from the top plane of the clamshell lid 20, the locking hole 22 and the through hole 23 can not only limit the periphery of the locking member 31, enabling the locking member 31 to move better in the vertical direction to engage with the locking groove 12, but also guide the locking member 31, reducing the occurrence of misalignment jamming or damage when the locking member 31 moves up and down, and effectively improving the performance stability of the door lock assembly 30 and the air fryer.

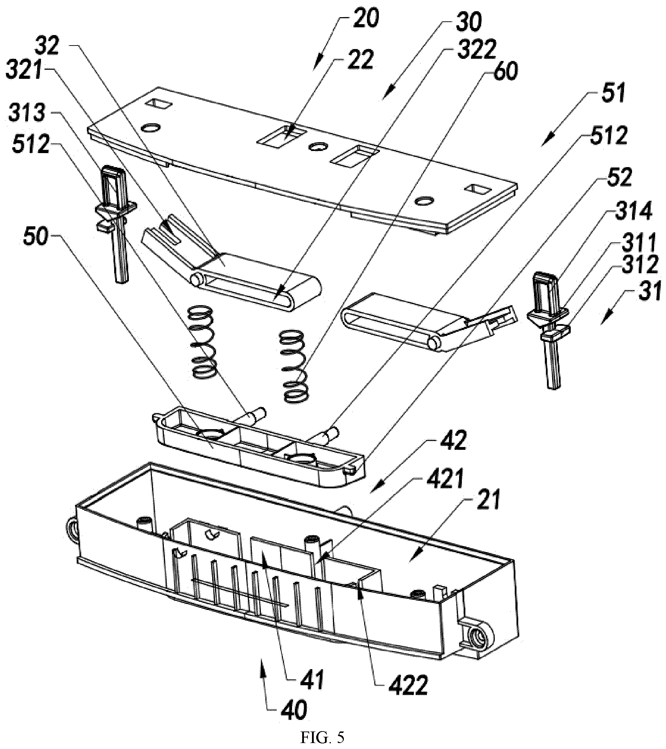

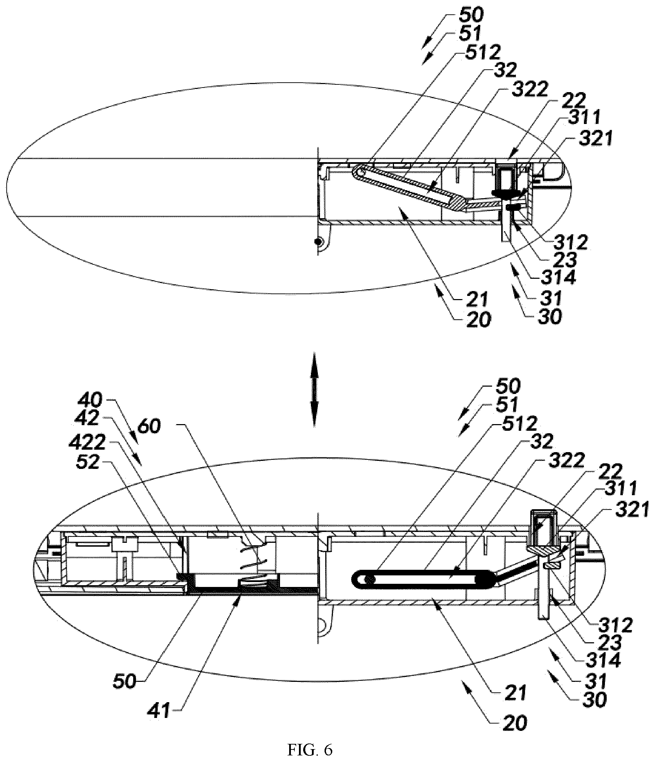

As shown in FIG. 5 and FIG. 6, in an optional embodiment, a first limiting protrusion 311 extending outward and a second limiting protrusion 312 located below the first limiting protrusion 311 are provided in the middle of the locking member 31, the external size of the first limiting protrusion 311 is larger than that of the locking hole 22, and the external size of the second limiting protrusion 312 is larger than that of the through hole 23, the locking member 31 is adapted to be movably limited in the mounting cavity 21 through the first limiting protrusion 311 and the second limiting protrusion 312, the first limiting protrusion 311 and the second limiting protrusion 312 are adapted to play a limiting role. By limiting the up and down direction of the locking member 31 through the first limiting protrusion 311 and the second limiting protrusion 312, the situation that the locking member 31 falls out of the locking hole 22 and/or the through hole 23 during up and down movement, resulting in failure of the door lock assembly 30, can be effectively avoided, and the performance stability of the door lock assembly 30 and the air fryer can be effectively improved.

As shown in FIG. 5 and FIG. 6, in an optional embodiment, the door lock assembly 30 further includes a transmission member 32 whose middle part is rotatably limited in the mounting cavity 21. One end of the transmission member 32 is provided with a clamping groove 321, and the other end is provided with a sliding groove 322, the transmission member 32 is adapted to be movably clamped to the locking member 31 through the clamping groove 321, a connecting member 51 extending into the mounting cavity 21 is provided on the unlocking member 50, and the connecting member 51 is adapted to be movably limited in the sliding groove 322, a lever transmission is formed between the transmission member 32 and the locking member 31 as well as the unlocking member 50. This arrangement can not only effectively simplify the structure of the air fryer, reduce production costs and user use costs, but also effectively reduce the operation difficulty of the door lock assembly 30 and improve user experience. At the same time, by movably drivingly connecting the transmission member 32 to the locking member 31 and the unlocking member 50, it can be ensured that the locking member 31 and the unlocking member 50 will not be jammed or damaged during up and down movement, effectively improving the performance stability of the door lock assembly 30 and the unlocking member 50.

As shown in FIG. 5 and FIG. 6, in an optional embodiment, the mounting groove 41 is provided with a vertically extending guide enclosure 42, and the guide enclosure 42 is adapted to match the unlocking member 50, limiting portions 52 extending outward are provided on both sides of the unlocking member 50, limiting grooves 422 matching the limiting portions 52 are provided on the guide enclosure 42, and the limiting portions 52 are adapted to be slidably provided in the limiting grooves 422. The guide enclosure 42 is adapted to play a limiting and/or guiding role. Through the guide enclosure 42, not only can the periphery of the unlocking member 50 be limited, enabling the unlocking member 50 to move better in the vertical direction to drive the locking member 31 to move to be separated from or engaged with the locking groove 12, but also the up and down movement of the unlocking member 50 can be guided, avoiding misalignment jamming and/or damage during movement, and effectively improving the performance stability of the unlocking member 50. At the same time, through the limiting portions 52 and the limiting grooves 422, not only can the sliding of the unlocking member 50 be guided and/or limited to reduce the probability of misalignment jamming or damage when the unlocking member 50 slides up and down, but also the unlocking member 50 can be limited to avoid the situation that the unlocking member 50 falls out of the limiting grooves 422 during up and down sliding, effectively ensuring the performance stability of the unlocking member 50 and user experience.

As shown in FIG. 5 and FIG. 6, in an optional embodiment, a connecting member 32 extending outward and drivingly connected to the locking member 31 is provided on the outer side of the unlocking member 50, a vertically extending guide groove 421 matching the connecting member 51 is provided on the guide enclosure 42, and the connecting member 51 is adapted to be slidably provided in the guide groove 421. The guide groove 421 is adapted to play a guiding and/or limiting role. Through the guide groove 421, not only can the sliding of the connecting member 51 be guided, enabling the connecting member 51 to move better in the vertical direction to drive the locking member 31 to move to be separated from or engaged with the locking groove 12, but also the left and right directions of the connecting member 51 can be limited, avoiding the situation that the connecting member 51 falls out of the sliding groove 421 of the transmission member 32 during up and down sliding, resulting in transmission failure, and effectively improving the transmission stability between the unlocking member 50 and the transmission member 32 as well as the performance stability of the air fryer.

As shown in FIG. 3 to FIG. 6, in an optional embodiment, the locking member 31 includes a first locking member 313 and a second locking member 314 arranged symmetrically, the connecting member 51 extending outward into the mounting cavity 21 is provided on the outer side of the unlocking member 50, and the connecting member 51 includes a first connecting member 511 and a second connecting member 512, the first connecting member 511 and the second connecting member 512 are adapted to be drivingly connected to the first locking member 313 and the second locking member 314 respectively. By arranging the first locking member 313 and the second locking member 314 symmetrically, the clamshell lid 20 can be better clamped to the main body 10 to close the lateral opening of the cooking cavity 11, effectively improving the clamping strength and stability between the clamshell lid 20 and the main body 10. At the same time, by driving the two first locking members 313 and second locking members 314 to move through the unlocking member 50, not only can the structure of the air fryer be simplified, reducing production costs and use costs, but also the operation difficulty of opening and closing the clamshell lid 20 can be effectively reduced, improving user convenience and experience.

As shown in FIG. 4, in an optional embodiment, the mounting groove 41 is adapted to be arranged adjacent to the outer surface of the clamshell lid 20. By arranging the mounting groove 41 adjacent to the outer surface of the clamshell lid 20, not only can the unlocking member 50 be further hidden to improve the overall aesthetics of the air fryer, but also the transmission distance between the unlocking member 50 and the locking member 31 can be shortened, enabling the unlocking member 50 to drive the locking member 31 to move to be separated from or engaged with the locking groove 12 faster and better, effectively improving transmission efficiency.

As shown in FIG. 4, in an optional embodiment, the bottom of the unlocking member 50 is adapted to be flush with the bottom plane of the protruding part 40. By setting the bottom of the unlocking member 50 to be flush with the bottom of the protruding part 40, the unlocking member 50 can be better hidden to improve the overall aesthetics of the air fryer and improve user experience.

### Embodiment 2:

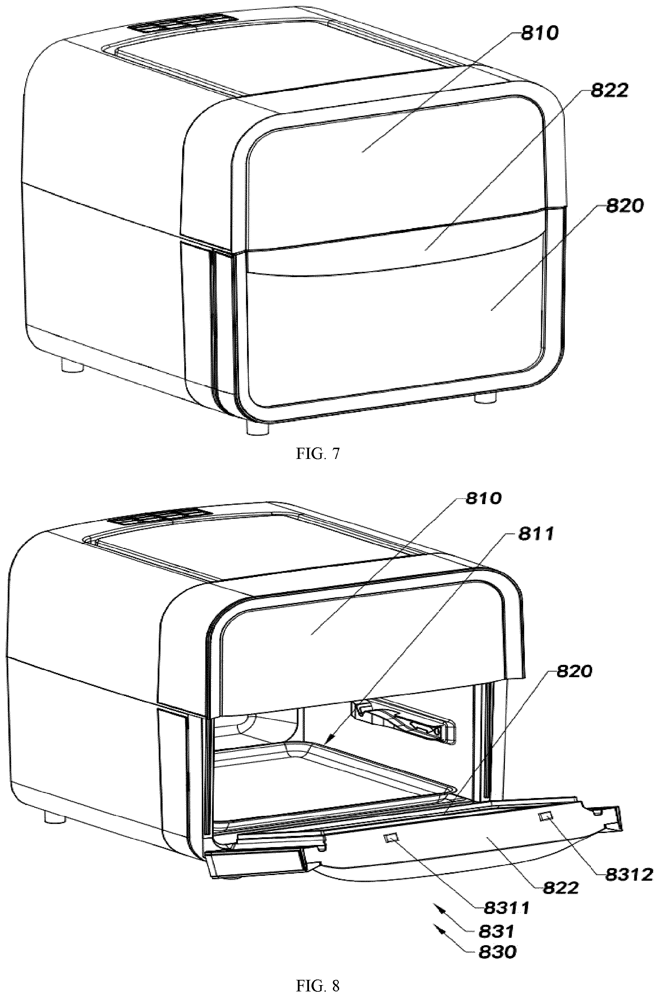

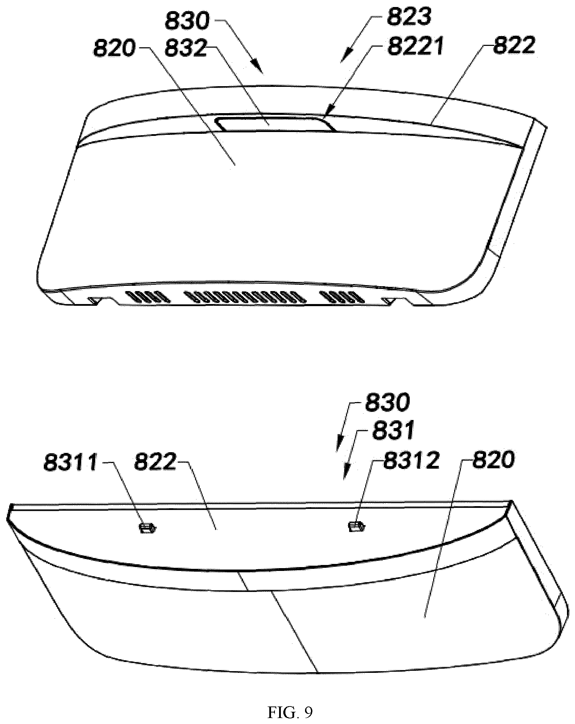

As shown in FIG. 7 to FIG.13, which are schematic diagrams of the second embodiment of a Clamshell air fryer provided by the present utility model, the air fryer includes a main body 810, a cooking cavity 811 with a lateral opening provided in the main body 810, and a hot air circulation system communicating with the cooking cavity 811, the hot air circulation system is adapted to generate circulating hot air and introduce it into the cooking cavity 811 to cook food in the cooking cavity 811.

As shown in FIG. 7 and FIG. 8, a clamshell lid 820 capable of flipping to open and close the opening is provided at the lateral opening of the cooking cavity 811, one end of the clamshell lid 820 is hinged to the main body 810, and the other end is provided with a door lock assembly 830, the door lock assembly 830 includes a locking member 831, a mounting cavity 821 is provided at the top of the clamshell lid 820, the lower part of the locking member 831 is movably limited in the mounting cavity 821, and the upper part is adapted to extend and protrude from the top plane of the clamshell lid 820, a locking groove with a downward opening corresponding to the position of the locking member 831 is provided at the top of the lateral opening of the cooking cavity 811. When the locking member 831 is separated from the locking groove, the clamshell lid 820 is adapted to be in a flippable state. When the locking member 831 is engaged with the locking groove, the clamshell lid 820 is adapted to be kept in a closed state.

Further, as shown in FIG. 7 and FIG. 8, the locking member 831 includes a first locking piece 8311 and a second locking piece 8312 arranged oppositely, a mounting cavity 821 is provided in the clamshell lid 820, one end of the first locking piece 8311 and the second locking piece 8312 is movably limited in the mounting cavity 821, and the other end is adapted to extend out of the clamshell lid 820 toward the edge of the opening, a first locking groove and a second locking groove corresponding to the first locking piece 8311 and the second locking piece 8312 are provided at the top of the lateral opening of the cooking cavity 811. When the first locking piece 8311 and the second locking piece 8312 are separated from the first locking groove and the second locking groove respectively, the clamshell lid 820 is adapted to be in a flippable state, and the user can open the opening of the cooking cavity 811 by flipping the clamshell lid 820 to put in or take out food. When the clamshell lid 820 is flipped to close the opening of the cooking cavity 811, and the first locking piece 8311 and the second locking piece 8312 are engaged with the first locking groove and the second locking groove respectively, the clamshell lid 820 is adapted to be kept in a closed state to facilitate food cooking. The air fryer, by hinging one end of the clamshell lid 820 to the main body 810 and separably clamping the other end to the main body 810 through the door lock assembly 830, not only can facilitate the user to flip the clamshell lid 820 to open and close the opening of the cooking cavity 811, but also can make the clamshell lid 820 more labor-saving when flipping, effectively improving the convenience of use and user experience of the air fryer.

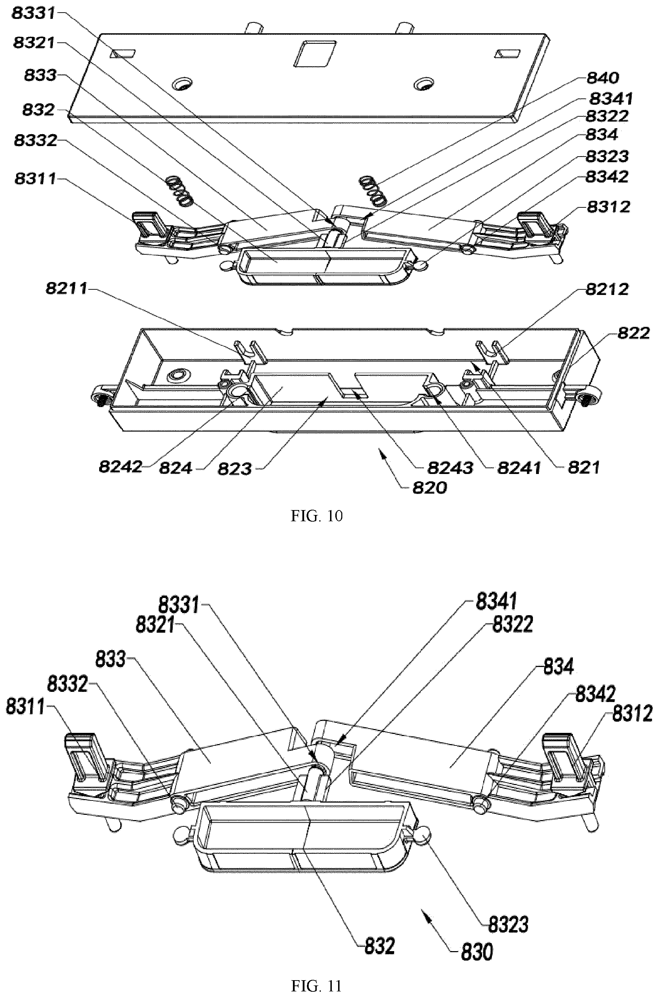

Specifically, as shown in FIG. 10 to FIG. 13, a protruding part 822 protruding from the outer surface of the clamshell lid is provided at the upper part of the clamshell lid 820, a mounting groove 823 with a downward opening and communicating with the mounting cavity 821 is provided at the bottom of the protruding part 822, an unlocking member 832 is movably limited in the mounting groove 823, a connecting member 8321 extending into the mounting cavity 821 is provided on the unlocking member 832, a first transmission member 833 and a second transmission member 834 are provided in the mounting cavity 821, and the connecting member 8321 is adapted to be drivingly connected to the first locking piece 8311 and the second locking piece 8312 through the first transmission member 833 and the second transmission member 834 respectively, an elastic member 840 telescopically connected to the door lock assembly 830 is provided in the clamshell lid 820, when the unlocking member 832 is moved into the mounting groove 823 by an external force, the elastic member 840 is adapted to be stretched or compressed, and the connecting member 8321 is adapted to drive the first locking piece 8311 and the second locking piece 8312 to move into the mounting cavity 821 through the first transmission member 833 and the second transmission member 834 respectively, thereby being separated from the first locking groove and the second locking groove. When the external force on the unlocking member 832 disappears, the unlocking member 832 is adapted to reset under the action of the elastic member 840, and the connecting member 8321 is adapted to drive the first locking piece 8311 and the second locking piece 8312 to move out of the mounting cavity 821 through the first transmission member 833 and the second transmission member 834 respectively, thereby being engaged with the first locking groove and the second locking groove. The air fryer can simplify the transmission structure of the door lock assembly 830 by arranging the connecting member 8321 on the unlocking member 832 to drive the first transmission member 833, the second transmission member 834, the first locking piece 8311 and the second locking piece 8312 to move through the connecting member 8321, so that the first locking piece 8311 and the second locking piece 8312 can be separably engaged with the main body 810, effectively reducing the production cost and user use cost of the air fryer and improving user experience.

As shown in FIG. 11, in an optional embodiment, one end of the first transmission member 833 and one end of the second transmission member 834 are movably connected to the first locking piece 8311 and the second locking piece 8312 respectively, and the other ends are provided with a first connecting groove 8331 and a second connecting groove 8341 respectively, both the first connecting groove 8331 and the second connecting groove 8341 are sleeved on the connecting member 8321. By sleeving the first transmission member 833 and the second transmission member 834 on the connecting member 8321 through the first connecting groove 8331 and the second connecting groove 8341, not only can the transmission structure of the door lock assembly 830 be simplified, thereby reducing production costs and user use costs, but also the synchronism of the first locking piece 8311 and the second locking piece 8312 during movement can be ensured, effectively improving the use fluency of the clamshell lid 820 and user experience.

As shown in FIG. 10 to FIG. 12, in an optional embodiment, a first rotating shaft 8332 and a second rotating shaft 8342 are provided on both sides of the first transmission member 833 and the second transmission member 834 respectively, a first support structure 8211 and a second support structure 8212 corresponding to the first rotating shaft 8332 and the second rotating shaft 8342 are provided in the mounting cavity 821 respectively, the first rotating shaft 8332 and the second rotating shaft 8342 are adapted to be movably limited on the first support structure 8211 and the second support structure 8212 respectively, the first support structure 8211 and the second support structure 8212 are adapted to support the first transmission member 833 and the second transmission member 834. By supporting the first transmission member 833 and the second transmission member 834 through the first support structure 8211 and the second support structure 8212, the first transmission member 833 and the second transmission member 834 can be supported, ensuring that the first transmission member 833 and the second transmission member 834 have sufficient movement space to drive the first locking piece 8311 and the second locking piece 8312 to move to be separated from or engaged with the first locking groove and the second locking groove. At the same time, the first support structure 8211 and the second support structure 8212 are adapted to limit the first transmission member 833 and the second transmission member 834. By limiting the first transmission member 833 and the second transmission member 834 through the first support structure 8211 and the second support structure 8212, the situation that the first transmission member 833 and the second transmission member 834 are jammed or damaged due to displacement during rotation can be avoided, effectively ensuring the transmission stability of the first transmission member 833 and the second transmission member 834 and the performance stability of the air fryer.

As shown in FIG. 11, in an optional embodiment, a plurality of reinforcing ribs 8322 are provided on the outer side of the connecting member 8321, and the reinforcing ribs 8322 are adapted to connect the connecting member 8321 and the unlocking member 832. By arranging a plurality of reinforcing ribs 8322 connected to the unlocking member 832 on the outer side of the connecting member 8321, the structural strength of the connecting member 8321 can be improved, ensuring the transmission stability of the connecting member 8321 and the performance stability of the air fryer.

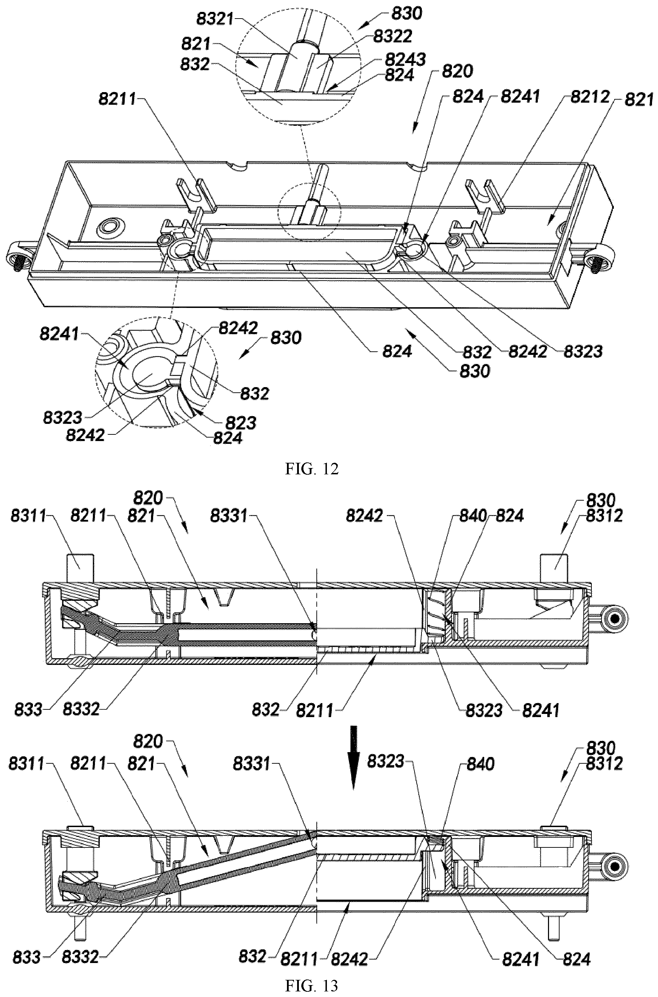

As shown in FIG. 10 and FIG. 12, in an optional embodiment, the mounting groove 823 is provided with a vertically extending guide enclosure 824 matching the unlocking member 832, guide portions 8323 extending outward are provided on both sides of the unlocking member 832, vertically extending guide grooves 8241 matching the guide portions 8323 are provided on the guide enclosure 824 at positions corresponding to the guide portions 8323, and the guide portions 8323 are adapted to be slidably limited in the guide grooves 8241, the guide enclosure 824 and the guide portions 8323 are adapted to guide the sliding of the unlocking member 832. By guiding the sliding of the unlocking member 832 through the guide enclosure 824 and the guide portions 8323, the unlocking member 832 can slide more smoothly, effectively ensuring user experience. At the same time, the guide enclosure 824 and the guide portions 8323 are adapted to limit the unlocking member 832. By limiting the unlocking member 832 through the guide enclosure 824 and the guide portions 8323, the situation that the unlocking member 832 is damaged due to misalignment or jammed during sliding can be avoided, effectively ensuring the performance stability of the door lock assembly 830 and the air fryer.

As shown in FIG. 10 and FIG. 13, in an optional embodiment, the guide groove 8241 is adapted to be formed by the guide enclosure 824 recessing outward, the elastic member 840 is provided in the guide groove 8241, and the elastic member is adapted to be located above the guide portion 8323, with the bottom of the elastic member 840 adapted to abut against the guide portion 8323 and the top adapted to abut against the top wall of the mounting cavity 821. By forming the guide groove 8241 by recessing the guide enclosure 824 outward, the structure of the door lock assembly 830 can be simplified, reducing production costs and user use costs. At the same time, by arranging the elastic member 840 in the guide groove 8241 and abutting against the guide portion 8323, not only can the installation structure of the elastic member 840 be simplified, reducing production costs and user use costs, but also the guide groove 8241 can be used to position the installation of the elastic member 840, reducing the installation difficulty of the elastic member 840. **In** addition, by arranging the elastic member 840 in the guide groove 8241, the guide groove 8241 can also be used to limit the elastic member 840 to avoid the situation that the elastic member 840 is damaged due to misalignment during compression or stretching, effectively ensuring the performance stability of the elastic member 840.

As shown in FIG. 10 and FIG. 12, in an optional embodiment, the opening of the guide groove 8241 is adapted to face the guide portion 8323, and a constricted portion 8242 is provided at the opening of the guide groove 8241, the internal size of the constricted portion 8242 is adapted to be smaller than the external size of the guide portion 8323, and the guide portion 8323 is adapted to be slidably limited in the guide groove 8241 through the constricted portion 8242. By slidably limiting the guide portion 8323 in the guide groove 8241 through the constricted portion 8242, not only can the situation that the guide portion 8323 is jammed or damaged due to misalignment during sliding be avoided, but also the situation that the guide portion 8323 falls out of the guide groove 8241 during sliding resulting in failure can be avoided, effectively ensuring the performance stability of the unlocking member 832.

As shown in FIG. 13, in an optional embodiment, the mounting groove 823 has an opening 8231, and the external size of the guide portion 8323 is preferably larger than the size of the opening 8231 of the mounting groove 823, the unlocking member 832 is adapted to be slidably limited in the mounting groove 823 through the guide portion 8323. By setting the external size of the guide portion 8323 to be larger than the size of the opening 8231 of the mounting groove 823, the situation that the unlocking member 832 falls out of the mounting groove 823 during sliding can be avoided, effectively ensuring the performance stability of the unlocking member 832.

As shown in FIG. 10 and FIG. 12, in an optional embodiment, a vertically arranged sliding groove 8243 matching the connecting member 8321 is further provided on the guide enclosure 824, and the connecting member 8321 is adapted to be slidably provided in the sliding groove 8243. **In** the air fryer, the sliding groove 8243 is adapted to limit and/or guide the sliding of the connecting member 8321. By limiting and/or guiding the sliding of the connecting member 8321 through the sliding groove 8243, the situation that the connecting member 8321 is damaged due to misalignment or jammed during sliding can be avoided, effectively ensuring the performance stability of the door lock assembly 830 and the air fryer.

As shown in FIG. 7 to FIG. 9, in an optional embodiment, the mounting groove 823 is adapted to be arranged adjacent to the outer surface of the clamshell lid 820, and the bottom of the unlocking member 832 is adapted to be flush with the bottom plane of the protruding part 822. By arranging the unlocking member 832 at the bottom of the protruding part 822 adjacent to the outer surface of the clamshell lid 820 and setting the bottom of the unlocking member 832 to be flush with the bottom plane of the protruding part 822, the unlocking member 832 can be hidden to improve the overall aesthetics of the air fryer.

It should be noted that the terminology used herein is for the purpose of describing specific embodiments only and is not intended to be limiting of exemplary embodiments according to the present disclosure. As used herein, unless the context clearly indicates otherwise, the singular form is also intended to include the plural form. **In** addition, it should be understood that when the terms "comprises" and/or "comprising" are used in this specification, they specify the presence of stated features, steps, operations, devices, components, and/or combinations thereof.

Unless specifically stated otherwise, the relative arrangement of components and steps, numerical expressions, and numerical values set forth in these embodiments do not limit the scope of the present disclosure. At the same time, it should be understood that, for the convenience of description, the sizes of the various parts shown in the drawings are not drawn according to the actual proportional relationship. For technologies, methods, and devices known to those of ordinary skill in the art, they may not be discussed in detail, but where appropriate, the technologies, methods, and devices should be regarded as part of the authorized specification. In all examples shown and discussed herein, any specific value should be interpreted as merely illustrative and not as a limitation. Therefore, other examples of the exemplary embodiments may have different values. It should be noted that similar reference numerals and letters indicate similar items in the following figures, so once an item is defined in one figure, it does not need to be discussed further in subsequent figures.

In the description of the present disclosure, it should be understood that orientation words such as "front, rear, upper, lower, left, right", "horizontal, vertical, vertical, horizontal" and "top, bottom" indicate the orientation or positional relationship based on the orientation or positional relationship shown in the drawings, which are only for the convenience of describing the present disclosure and simplifying the description, and do not indicate or imply that the device or element referred to must have a specific orientation or be constructed and operated in a specific orientation, so it cannot be understood as a limitation on the protection scope of the present disclosure. The orientation words "inner and outer" refer to the inner and outer relative to the contour of each component itself.

For the convenience of description, spatially relative terms such as "above", "over", "on the surface", "upper" and the like may be used herein to describe the spatial positional relationship between one device or feature and other devices or features as shown in the drawings. It should be understood that spatially relative terms are intended to include different orientations of the device in use or operation in addition to the orientation shown in the drawings. For example, if the device in the drawing is turned over, the device described as "above other devices or structures" or "over other devices or structures" will then be oriented as "below other devices or structures" or "under other devices or structures". Thus, the exemplary term "above" can include both an orientation of "above" and "below". The device can also be oriented in other different ways (rotated 90 degrees or in other orientations), and the spatially relative descriptions used herein are interpreted accordingly.

In addition, it should be noted that the use of words such as "first" and "second" to define components is only for the convenience of distinguishing corresponding components. Unless stated otherwise, the above words have no special meaning, so they cannot be understood as a limitation on the protection scope of the present disclosure.

The above is a detailed introduction to a clamshell air fryer provided by the present disclosure. Specific examples are used herein to explain the principles and implementation modes of the present disclosure. The descriptions of the above embodiments are only used to help understand the method and core idea of the present disclosure. At the same time, for those skilled in the art, according to the idea of the present disclosure, there will be changes in the specific implementation modes and application scopes. In conclusion, the content of this specification should not be understood as a limitation on the present disclosure.

### Industrial Applicability

In the present application, by arranging the protruding part on the clamshell lid and respectively arranging the door lock assembly and the unlocking member in the clamshell lid and movably in the mounting groove at the bottom of the protruding part, the door lock assembly and the unlocking member can be better hidden, so as to improve the overall aesthetics of the air fryer. At the same time, when an upward moving force is applied to the unlocking member, not only can the locking member be separated from the locking groove, so that the clamshell lid is in a state of being flippable to open the lateral opening, but also the upward movement of the unlocking member can enable the mounting groove to become a force application point for the user's fingers to extend into to drive the clamshell lid to flip, effectively improving the convenience of use and user experience of the air fryer. In addition, by arranging the connecting member on the unlocking member to drive the first transmission member, the second transmission member, the first locking piece and the second locking piece to move through the connecting member, so that the first locking piece and the second locking piece can be separably engaged with the main body, the transmission structure of the door lock assembly can be simplified, effectively reducing the production cost and user use cost of the air fryer and improving user experience.

## Claims

1. A Clamshell air fryer, comprising a main body (10, 810) and a cooking cavity (11, 811) with a lateral opening provided on the inner side of the main body (10, 810), wherein a clamshell lid (20, 820) capable of flipping to open and close the lateral opening is provided at the lateral opening of the cooking cavity (11, 811), the lower part of the clamshell lid (20, 820) is hinged to the main body (10, 810), and the upper part is provided with a door lock assembly (30, 820), **characterized in that** the door lock assembly (30, 820) comprises a locking member (31, 831), a mounting cavity (21, 821) is provided at the top of the clamshell lid (20, 820), the lower part of the locking member (31, 831) is movably limited in the mounting cavity (21, 821), the upper part is adapted to extend and protrude from the top plane of the clamshell lid (20, 820), and a locking groove (12) corresponding to the position of the locking member (31, 831) is provided at the top of the lateral opening of the cooking cavity (11, 811); a protruding part (40, 822) protruding from the outer surface of the clamshell lid (20, 820) is provided at the upper part of the clamshell lid (20, 820), a mounting groove (41, 823) with a downward opening and communicating with the mounting cavity (21, 821) is provided at the bottom of the protruding part (40, 822), an unlocking member (50, 832) is movably limited in the mounting groove (41, 823), and the unlocking member (50, 832) is adapted to be drivingly connected to the locking member (31, 831); an elastic member (60, 840) telescopically connected to the door lock assembly (30, 820) is provided in the clamshell lid (20, 820), and the elastic member (60, 840) has an active state of being stretched or compressed and a reset state;
when the unlocking member (50, 832) is moved upward by an external force, the elastic member (60, 840) is adapted to be in the active state, and the locking member (31, 831) is adapted to move downward under the driving of the unlocking member (50, 832) to be separated from the locking groove (12); when the external force on the unlocking member (50, 832) disappears, the elastic member (60, 840) is adapted to change from the active state to the reset state, the unlocking member (50, 832) is adapted to move downward to reset under the action of the elastic member (60, 840), and the locking member (31, 831) is adapted to move upward under the action of the elastic member (60, 840) to engage with the locking groove (12).

2. The Clamshell air fryer according to claim 1, **characterized in that** the door lock assembly (30) further comprises a transmission member (32) whose middle part is rotatably limited in the mounting cavity (21), one end of the transmission member (32) is provided with a clamping groove (321), the other end is provided with a sliding groove (322), the transmission member (32) is adapted to be movably clamped to the locking member (31) through the clamping groove (321), a connecting member (51) extending into the mounting cavity (21) is provided on the unlocking member (50), and the connecting member (51) is adapted to be movably limited in the sliding groove (322).

3. The Clamshell air fryer according to claim 1, **characterized in that** the mounting groove (41) is provided with a vertically extending guide enclosure (42), the guide enclosure (42) is adapted to match the unlocking member (50), limiting portions (52) extending outward are provided on both sides of the unlocking member (50), limiting grooves (422) matching the limiting portions (52) are provided on the guide enclosure (42), and the limiting portions (52) are adapted to be slidably provided in the limiting grooves (422).

4. The Clamshell air fryer according to claim 3, **characterized in that** a connecting member (51) extending outward and drivingly connected to the locking member (31) is provided on the outer side of the unlocking member (50), a vertically extending guide groove (421) matching the connecting member (51) is provided on the guide enclosure (42), and the connecting member (51) is adapted to be slidably provided in the guide groove (421).

5. The Clamshell air fryer according to claim 3, **characterized in that** the locking member (31) comprises a first locking member (313) and a second locking member (314) arranged symmetrically, a connecting member (51) extending outward into the mounting cavity (21) is provided on the outer side of the unlocking member (50), the connecting member (51) comprises a first connecting member (511) and a second connecting member (512), and the first connecting member (511) and the second connecting member (512) are adapted to be drivingly connected to the first locking member (313) and the second locking member (314) respectively.

6. The Clamshell air fryer according to claim 1, **characterized in that** the locking member (831) comprises a first locking piece (8311) and a second locking piece (8312) arranged oppositely, a mounting cavity (821) is provided in the clamshell lid (820), a first locking groove and a second locking groove corresponding to the first locking piece (8311) and the second locking piece (8312) are provided at the lateral opening of the cooking cavity (811); a mounting groove (823) communicating with the mounting cavity (821) is provided on the clamshell lid (820), an unlocking member (832) is movably limited in the mounting groove (823), a connecting member (8321) extending into the mounting cavity (821) is provided on the unlocking member (832), a first transmission member (833) and a second transmission member (834) are provided in the mounting cavity (821), and the connecting member (8321) is adapted to be drivingly connected to the first locking piece (8311) and the second locking piece (8312) through the first transmission member (833) and the second transmission member (834) respectively; When the unlocking member (832) is moved upward by an external force, the elastic member (840) is adapted to be in the active state, and the connecting member (8321) is adapted to drive the first locking piece (8311) and the second locking piece (8312) to move into the mounting cavity (821) through the first transmission member (833) and the second transmission member (834) respectively, thereby being separated from the first locking groove and the second locking groove; when the external force on the unlocking member (832) disappears, the unlocking member (832) is adapted to reset under the action of the elastic member (840), and the connecting member (8321) is adapted to drive the first locking piece (8311) and the second locking piece (8312) to move out of the mounting cavity (821) through the first transmission member (833) and the second transmission member (834) respectively, thereby being engaged with the first locking groove and the second locking groove.

7. The Clamshell air fryer according to claim 6, **characterized in that** one end of the first transmission member (833) and one end of the second transmission member (834) are movably connected to the first locking piece (8311) and the second locking piece (8312) respectively, the other ends are provided with a first connecting groove (8331) and a second connecting groove (8341) respectively, and both the first connecting groove (8331) and the second connecting groove (8341) are sleeved on the connecting member (8321).

8. The Clamshell air fryer according to claim 7, **characterized in that** a first rotating shaft (8332) and a second rotating shaft (8342) are provided on both sides of the first transmission member (833) and the second transmission member (834) respectively, a first support structure (8211) and a second support structure (8212) corresponding to the first rotating shaft (8332) and the second rotating shaft (8342) are provided in the mounting cavity (821) respectively, and the first rotating shaft (8332) and the second rotating shaft (8342) are adapted to be movably limited on the first support structure (8211) and the second support structure (8212) respectively.

9. The Clamshell air fryer according to claim 6, **characterized in that** the mounting groove (823) is provided with a vertically extending guide enclosure (824) matching the unlocking member (832), guide portions (8323) extending outward are provided on both sides of the unlocking member (832), guide grooves (8241) corresponding to the guide portions (8323) are provided on the guide enclosure (824), and the guide portions (8323) are adapted to be slidably limited in the guide grooves (8241).

10. The Clamshell air fryer according to claim 9, **characterized in that** the guide groove (8241) is adapted to be formed by the guide enclosure (824) recessing outward, the elastic member (840) is provided in the guide groove (8241), and one end of the elastic member (840) abuts against the guide portion (8323); and/or
A constricted portion (8242) is provided at the opening of the guide groove (8241), the internal size of the constricted portion (8242) is smaller than the external size of the guide portion (8323), the guide portion (8323) is adapted to be slidably limited in the guide groove (8241) through the constricted portion (8242), the external size of the guide portion (8323) is larger than the opening size of the mounting groove (823), and the unlocking member (832) is adapted to be slidably limited in the mounting groove (823) through the guide portion (8323).

11. The Clamshell air fryer according to any one of claims 6-10, **characterized in that** the mounting groove (823) is provided with a vertically extending guide enclosure (824) matching the unlocking member (832), a vertically arranged sliding groove (8243) matching the connecting member (8321) is provided on the guide enclosure (824), the connecting member (8321) is slidably provided in the sliding groove (8243), a plurality of reinforcing ribs (8322) are provided on the outer side of the connecting member (8321), and the reinforcing ribs (8322) are adapted to connect the connecting member (8321) and the unlocking member (832).

12. The Clamshell air fryer according to any one of claims 1-11, **characterized in that** a locking hole (22) communicating with the mounting cavity (21) is provided at the top of the clamshell lid (20), a through hole (23) corresponding to the locking hole (22) is provided at the bottom of the mounting cavity (21), the lower part of the locking member (31) is movably limited in the through hole (23), the upper part is adapted to be movably limited in the locking hole (22), and at least part of it extends to protrude from the top plane of the clamshell lid (20).

13. The Clamshell air fryer according to claim 12, **characterized in that** a first limiting protrusion (311) extending outward and a second limiting protrusion (312) located below the first limiting protrusion (311) are provided in the middle of the locking member (31), the external size of the first limiting protrusion (311) is larger than that of the locking hole (22), the external size of the second limiting protrusion (312) is larger than that of the through hole (23), and the locking member (31) is adapted to be movably limited in the mounting cavity (21) through the first limiting protrusion (311) and the second limiting protrusion (312).

14. The Clamshell air fryer according to any one of claims 1-13, **characterized in that** the mounting groove (41, 823) is adapted to be arranged adjacent to the outer surface of the clamshell lid (20, 820).

15. The Clamshell air fryer according to claim 14, **characterized in that** the bottom of the unlocking member (50, 832) is adapted to be flush with the bottom plane of the protruding part (40, 822).
